(19) Europäisches Patentamt / European Patent Office / Office européen des brevets

(11) **EP 2 669 259 A1**

(12) **EUROPEAN PATENT APPLICATION**

(43) Date of publication:
**04.12.2013 Bulletin 2013/49**

(51) Int Cl.:
***C03C 17/42*** *(2006.01)*

(21) Application number: **13169969.6**

(22) Date of filing: **31.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.05.2012 US 201213485047**

(71) Applicant: **GUARDIAN INDUSTRIES CORP.**
**Auburn Hills,**
**Michigan 48326-1714 (US)**

(72) Inventors:
- **LIANG, Liang**
  **Taylor, MI Michigan 48180 (US)**
- **BLACKER, Richard**
  **North Oaks, MN 55127 (US)**
- **LEWIS, Mark A.**
  **Ypsilanti, MI Michigan 48197 (US)**

(74) Representative: **Hess, Peter K. G.**
**Bardehle Pagenberg Partnerschaft**
**Patentanwälte, Rechtsanwälte**
**Prinzregentenplatz 7**
**81675 München (DE)**

(54) **Coated article comprising a hydrophobic anti-reflection surface, and methods for making the same**

(57) Certain examples embodiments relate to hydrophobic anti-reflection coatings, and/or methods of making the same. A major surface of an anti-reflection coating may be treated with a silane-based solution so as to increase the contact angle of the coating's surface. The silane-based solution may include silane(s) having alkyl and/or fluoroalkyl functional groups. The treatment of the major surface of the AR coating may include chemically grafting the surface of the coating such that the silanes and functional groups bond to an outermost portion of the coating. The presence of the silanes and/or the functional groups may lower the surface energy of the coating. The lowered surface energy and/or intrinsic roughness of the AR coating may cause the contact angle of the coating to rise to hydrophobic and/or super hydrophobic levels, such that the hydrophobic AR coating possesses antifogging and/or anti-fouling properties.

**Description**

Certain example embodiments of this invention relate to a method of treating an antireflective (AR) coating supported by a glass substrate so as to increase the contact angle of the AR coating. The AR coating may include, in certain exemplary embodiments, porous metal oxide(s) and/or silica, and may be produced using a sol-gel process. The AR coating may, for example, be deposited on glass used as a substrate or superstrate for the production of photovoltaic devices or other electronic devices, although it also may used in other applications. In certain example embodiments, an AR coating disposed on a substrate is treated with a silane-inclusive solution, and the silane may bond to the surface of the AR coating. In some cases, the silane may comprise a water-repelling group such as an alkyl and/or fluoroalkyl group, which may help increase the contact angle of the modified surface of the AR coating.

BACKGROUND AND SUMMARY OF EXAMPLE EMBODIMENTS

Glass is desirable for numerous properties and applications, e.g., based on its optical clarity and overall visual appearance. It would be desirable to optimize certain optical properties (e.g., light transmission, reflection and/or absorption) for certain example applications. For instance, in some cases, reduction of light reflection from the surface of a glass substrate may be desirable for storefront windows, electronic devices, monitors/screens, display cases, photovoltaic devices such as solar cells, picture frames, other types of windows, and so forth.

Photovoltaic devices such as solar cells (and modules thereof) are known in the art. Glass is an integral part of most common commercial photovoltaic modules, including both crystalline and thin film types. A solar cell/module may include, for example, a photoelectric transfer film made up of one or more layers located between a pair of substrates. One or more of the substrates may be glass, and the photoelectric transfer film (typically semiconductor) may be used for converting solar energy to electricity. Example solar cells are disclosed in U.S. Pat. Nos. 4,510,344, 4,806,436, 6,506,622, 5,977,477, and JP 07-122764, the disclosures of which are all hereby incorporated herein by reference in their entireties.

Substrate(s) in a solar cell/module are often made of glass. Incoming radiation passes through the incident glass substrate of the solar cell before reaching the active layer(s) (e.g., photoelectric transfer film such as a semiconductor) of the solar cell. Radiation that is reflected by the incident glass substrate does not make its way into the active layer(s) of the solar cell, thereby resulting in a less efficient solar cell. In other words, it would be desirable to decrease the amount of radiation that is reflected by the incident substrate, thereby increasing the amount of radiation that makes its way through the incident glass substrate (the glass substrate closest to the sun) and into the active layer(s) of the solar cell. In particular, the power output of a solar cell or photovoltaic (PV) module may be dependent upon the amount of light, or number of photons, within a specific range of the solar spectrum, that passes through the incident glass substrate and reach the photovoltaic semiconductor.

Because the power output of the module may depend upon the amount of light within the solar spectrum that passes through the glass and reaches the PV semiconductor, attempts have been made to boost overall solar transmission through the glass used in PV modules. One attempt is the use of low-iron or "iron-free" or "clear" glass, which may increase the amount of solar light transmission when compared to regular float glass, through absorption reductions. Such an approach may or may not be used in conjunction with certain embodiments of this invention.

In certain example embodiments of this invention, an attempt to address the aforesaid problem(s) is made using an antireflective (AR) coating on a glass substrate (the AR coating may be provided on either side, or both sides, of the glass substrate in different embodiments of this invention). An AR coating may increase transmission of light through the light incident substrate, and thus increase the power and efficiency of a PV module in certain example embodiments of this invention.

In many instances, glass substrates have an index of refraction of about 1.52, and typically about 4% of incident light may be reflected from the first surface. Single-layered coatings of transparent materials such as silica and alumina having a refractive index of equal to the square root of that of glass (e.g., about 1.23 +/- 10%) may be applied to minimize or reduce reflection losses and enhance the percentage of light transmission through the incident glass substrate. The refractive indices of silica and alumina are about 1.46 and 1.6, respectively, and thus these materials alone in their typical form may not meet this low index requirement in certain example instances.

In certain example embodiments of this invention, pores are formed in such materials or the like. In particular, in certain example embodiments of this invention, porous inorganic coated films may be formed on glass substrates in order to achieve broadband anti-reflection (AR) properties. Because refractive index is related to the density of coating, it may be possible to reduce the refractive index of a coating by introducing porosity into the coating. Pore size and distribution of pores may significantly affect optical properties. Pores may preferably be distributed homogeneously in certain example embodiments, and the pore size of at least some pores in a final coating may preferably be substantially smaller than the wavelength of light to be transmitted. For example, it is believed that about 53% porosity (+/about 10%, more preferably +/- about 5% and sometimes even +/- 2%) may be required in order to lower the refractive index of silica-based coatings from about 1.46 to about 1.2 and that about 73% porosity (+/- about 10%, more preferably +/- about 5% or and sometimes even +/- 2%) may be required to achieve alumina based coatings having about the same low index.

The mechanical durability of coatings, however, may be adversely affected with major increases in porosity. Porous coatings also tend to be prone to scratches, mars, etc. Further, in some cases, anti-reflection coatings have low contact angles, and thus exhibit hydrophilic properties. This may render the AR coatings vulnerable to moisture attacks. Because of the hydrophilic properties, AR coatings in some cases may absorb moisture when it comes into contact with the surface of the coating. This absorption may alter and/or degrade the optical and/or mechanical properties of the AR coating. Thus, it will be appreciated that there exists a need in the art for AR coatings having higher contact angles and/or methods of making the same. AR coatings with higher contact angles may advantageously exhibit hydrophobic and/or super-hydrophobic properties without significantly adversely affecting optical properties and/or the mechanical durability of the AR coatings.

Certain example embodiments of this invention may relate to a method of treating a major surface of a coated article including a broadband anti-reflective coating. In certain instances, the method may comprise treating the major surface of the AR coating with a solution comprising a silane comprising at least an alkyl and/or fluoroalkyl functional group, so as to form an anti-reflective coating comprising a porous silica-based matrix on the glass substrate.

Certain example embodiments of this invention may relate to a method of treating a coated article including a broadband anti-reflective coating so as to increase the contact angle of a major surface of the AR coating. In certain instances, the method may comprise modifying a major surface of an anti-reflection coating disposed on a glass substrate by treating said coating with a solution comprising a silane comprising at least one alkyl and/or fluoroalkyl functional group, such that the modified surface has a contact angle of at least about 85 degrees.

Other example embodiments of this invention may relate to a method for treating a major surface of a broadband anti-reflective coating disposed on a coated article. In certain instances, the method may comprise chemically grafting the major surface of the anti-reflection coating by exposing the surface of the coating to a solution comprising hydrolyzed silane comprising at least an alkyl and/or fluoroalkyl functional group and condensing the hydrolyzed silane via hydroxyl groups disposed on the major surface of the anti-reflection coating so as to form a modified surface comprising silane. The alkyl and/or fluoroalkyl functional group may be oriented such that at least a terminal end of the functional group is proximate an outermost surface of the modified coating. The contact angle of the modified surface may be at least about 85 degrees.

Still further example embodiments may relate to a coated article. The coated article may comprise a hydrophobic anti-reflection coating disposed on a glass substrate. An outermost surface of the anti-reflection coating may comprise a silane, in turn, comprising an alkyl and/or fluoroalkyl functional group. The surface of the coating may a contact angle of at least about 85 degrees.

BRIEF DESCRIPTION OF THE DRAWINGS

FIGURE 1 illustrates an example of an anti-reflection coating;

FIGURES 2(a)-(b) illustrate differences in the contact angles between a sessile drop of water on a hydrophilic surface and a hydrophobic surface, respectively;

FIGURE 3 is a schematic illustration of the surface modification of an AR coating with PTEOS in accordance with certain example embodiments;

FIGURE 4 is a schematic illustration of the surface modification of an AR coating with TFTMOS in accordance with certain example embodiments;

FIGURE 5 is a schematic illustration of the surface modification of an AR coating with a silane comprising an alkyl group and/or a fluoroalkyl group in accordance with certain example embodiments;

FIGURES 6(a) and (b) illustrate an example mechanism for the hydrolysis of the silane and an example mechanism of condensation of a hydrolyzed silane with a hydroxyl group on the surface of an AR coating in accordance with certain example embodiments;

FIGURE 7 is a schematic view of an anti-reflection coating comprising a modified surface in accordance with certain example embodiments;

FIGURES 8(a)-(b) help show the effects that trapping air inside a roughened surface may have on contact angles;

FIGURE 9 provides scanning electron microscope (SEM) images of the surface of AR coatings;

FIGURE 10 shows an example of the difference in contact angle between a drop of water on the surface of a modified AR coating and a drop of water on the surface of an uncoated glass substrate;

FIGURE 11 illustrates an example of the difference in contact angle between a drop of water on the surface of a modified AR coating disposed on the smooth side of a matte-matte glass substrate and a drop of water on the on the smooth side of an uncoated matte-matte glass substrate;

FIGURE 12 shows an example of the difference in contact angle between an AR coating modified with PTEOS and one modified with TFTMOS;

FIGURE 13 is a graph illustrating an example of the contact angle of water on a modified surface of an AR coating versus the reaction time;

FIGURES 14(A)-(D) are AFM images illustrating surface roughness changes with increasing reaction time;

FIGURE 15 is a graph showing the transmittance curve of an example modified AR coated glass substrate over increasing reaction time; and

FIGURE 16 is a graph that plots thickness and refractive index of an example AR coating versus reaction time.

DETAILED DESCRIPTION OF EXAMPLE EMBODIMENTS

Certain example embodiments relate to antireflective (AR) coatings that may be provided for coated articles used in devices a variety of window, electronic device, and/or other applications such as, for example, photovoltaic devices, storefront windows, display cases, picture frames, greenhouses, monitors, screens, and/or the like. In certain example embodiments (e.g., in photovoltaic devices), the AR coating may be provided on either the light incident side and/or the other side of a substrate (e.g., glass substrate), such as a front glass substrate of a photovoltaic device. In other example embodiments, the AR coatings described herein may be used in the context of sport and stadium lighting (as an AR coating on such lights), and/or street and highway lighting (as an AR coating on such lights) in certain example instances.

In photovoltaic device applications, for example, an improved anti-reflection (AR) coating may provided on a light incident glass substrate of a solar cell or the like. This AR coating may function to reduce reflection of light from the glass substrate, thereby allowing more light in the solar spectrum to pass through the incident glass substrate and reach the photovoltaic semiconductor so that the photovoltaic device (e.g., solar cell) can be more efficient. The coating may be provided on a glass substrate, superstrate, and/or in any other suitable location in different instances.

In certain example embodiments, porous inorganic AR coatings may be made by (1) a porogen approach using micelles as a template in a metal (e.g., Si, Al, Ti, etc.) alkoxide matrix; (2) inorganic or polymeric particles with metal alkoxides as binders; (3) inorganic nanoparticles with charged polymers as binder, and/or (4) hollow or mesoporous silica nanoparticles.

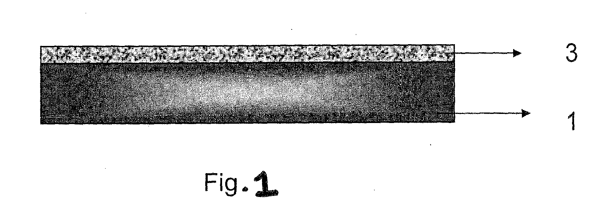

Referring now more particularly to the accompanying drawings in which like reference numerals indicate like parts throughout the several views, Fig. 1 is a side cross-sectional view of a coated article according to an example non-limiting embodiment of this invention. The coated article includes substrate 1 (e.g., clear, green, bronze, or blue-green glass substrate from about 1.0 to 10.0 mm thick, more preferably from about 1 .0 mm to 3.5 mm thick), and anti-reflective coating 3 provided on the substrate 1 either directly or indirectly. The anti-reflective coating 3 may comprise a single or multiple layer porous silica-based matrix. Example methods of making an improved silica-based anti-reflective coating 3 are described in detail in U.S. Application Serial Nos. 13/360,898 and 13/361,754, filed on January 30, 2012, and hereby incorporated herein by reference.

In certain example embodiments, AR coating 3 may be made by combusting carbon-based structures from a silica-based coating in order to make a porous silica-based layer. In other example embodiments, AR coating 3 may comprise mesoporous metal oxide and/or silica based particles. In further example embodiments, AR coating 3 may be graded with respect to porosity. AR coating 3 may be a single layer or may comprise multiple layers.

In certain example embodiments, wettability may be an important property for anti-reflection films and/or coatings. In some cases, the wettability of the AR coating may impact the durability of the coated article. For example, some AR coatings may have low contact angles (e.g., less than 20 degrees, or even less than 10 degrees, +/- 20%), and may in certain instances exhibit hydrophilic properties. In some cases, moisture may attack the surface of a film, e.g., when the surface of the AR coating comes into contact with moisture, because of the low contact angle and/or hydrophilic properties. This may occur, for instance, if the film is exposed to the elements. When moisture attacks a coating, the coating may absorb some of the moisture. The moisture may alter the porosity of the coating. In cases where the porosity of the coating or film has an effect on the performance of an article (e.g., when the film or coating is designed to decrease reflection such as in an AR coating or film), moisture attacks may reduce the effectiveness of the coating or film, and may in some cases eventually alter the transmittance of the coated article. Thus, it will be appreciated that there is a need to address these and/or other problems. The inventors of the instant application have realized these and/or other problems may be addressed by providing AR coatings comprising surfaces with hydrophobic properties.

In certain example embodiments, a hydrophobic surface (e.g., of an AR film) may exhibit a higher resistance to a moisture attack. In certain examples, the hydrophobic surface may improve the resistance of the film or coating to the condensation of water and/or fog on the surface of the coated article.

Furthermore, a hydrophobic surface of a coated article may also reduce the likelihood of snow freezing on the surface of the coated article. Additionally, super-hydrophobic surfaces may enable the film or coating to be self-cleaning. For example, a super-hydrophobic coating may enable a water drop to roll, rather than slide, over the coating. In certain example embodiments, a rolling water drop may remove dirt, debris, and/or other impurities/particles on the surface of an AR coating. This may in some cases enable the optical performance of the AR coating to remain more consistent, e.g., over time and/or over a variety of conditions.

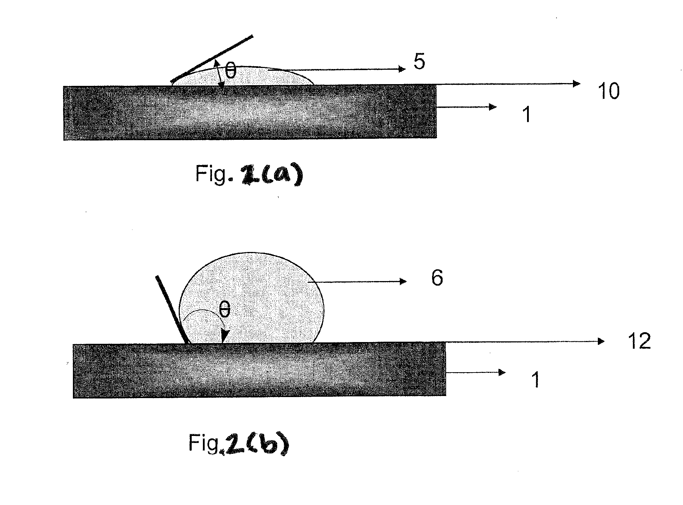

Figs. 2(a) and 2(b) illustrate differences in the contact angles between sessile drops of water 5 and 6 on a hydrophilic surface 10 and a hydrophobic surface 12, respectively. As can be seen from these drawings, when the contact angle is lower, as in the hydrophilic surface example, the drop of water is in contact with more surface area of the coating, and is attracted to the surface rather than repelled by it. As noted above, the optical performance of an AR coating exhibiting hydrophilic performance may change because of moisture being absorbed into the pores of the AR coating. Furthermore, hydrophilic AR coatings may exhibit poor anti-fog, anti-snow, and/or anti-soiling properties. Thus, it may be desirable to improve/create hydrophobic properties in an AR coating, such as those shown in Fig. 2(b), without compromising the durability and/or optical properties of the AR coating.

The wetting/wetability of a solid may be affected by the surface energy, surface roughness, and/or homogeneity of the solid. A surface with a high degree of roughness and/or a low surface energy may exhibit hydrophobic properties. A surface with both a higher degree of roughness and a low surface energy may exhibit super-hydrophobic properties. For example, in certain cases, the highest contact angle for a sessile drop of water on a smooth surface, obtained by lowering the surface energy, may be about 120 degrees. However, in some cases, in order to achieve a contact angle exceeding 120 degrees, the surface roughness of the coating may be increased. In some instances, the fine surface roughness produced by a fractal structure can impact the contact angle of the surface. For example, contact angles of 170 degrees and higher between a sessile drop of water and the surface of a coating may be achieved by using rough, low surface energy materials.

Super-hydrophobic coatings may be made by various methods. In certain example embodiments, super-hydrophobic surfaces may be created by plasma etching, plasma deposition, laser treatment, sol-gel processing, anodic oxidation of aluminum, chemical etching, and/or chemical grafting.

In certain example embodiments, chemical grafting may advantageously present an economical method of producing super-hydrophobic coatings without requiring special equipment, with reduced damage to the original surface of the coating, and may be readily scalable.

In certain example embodiments, it has advantageously been found that hydrophobic AR coatings may be developed by modifying the surface of the AR coating with a silane (e.g., a silane comprising an alkyl and/or fluoroalkyl group). For example, an organic silane may be grafted onto the surface of an AR coating in order to increase the contact angle of the coating. In certain example embodiments, a contact angle of at least about 75 degrees, more preferably at least about 85 degrees, and most preferably at least about 100 degrees, and sometimes even at least 120 degrees, may be achieved on the surface of an AR coating through such modification. In certain example embodiments, the contact angle of the AR coating may increase from around 10 degrees (the contact angle of the unmodified surface) to as high as 120 degrees (after surface modification). In certain example embodiments, a hydrophobic AR coating made according to certain example methods disclosed herein may exhibit improved anti-fogging and/or anti-soiling properties, while maintaining the optical and/or mechanical properties of untreated AR coatings.

Certain example embodiments relate to methods of chemically grafting and/or treating the surface of an AR coating with a silane comprising an alkyl or fluorinated alkyl group such that the AR coating becomes more hydrophobic (e.g., the contact angle increases). In certain example embodiments, a modified hydrophobic AR coating may possess optical and/or mechanical properties similar to an untreated AR coating, but may exhibit improved anti-fogging and/or anti-soiling properties.

In certain cases, a super-hydrophobic coating may be formed by combining a low energy surface with a high surface roughness. In certain example embodiments, it has been found that a high contact angle may be achieved by reacting an AR coating with various types of silanes. For instance, in certain example embodiments, a coated substrate comprising an AR coating may be coated, dipped, etc., with a silane-inclusive solution.

In certain exemplary embodiments, alkyl and/or fluorinated alkyl groups may demonstrate a low energy of interaction with water. In certain cases, water may be strongly repelled by surface terminal groups comprising these groups, resulting in higher contact angles. For example, a flat, planar surface (with no surface microstructure) comprising a surface terminal group of $CH_2$ or $CH_3$ may have a contact angle of about 94 or 111 degrees, respectively. Additionally, a substantially flat, planar surface (with substantially no surface microstructures) comprising a surface terminal group of $CF_2$ or $CF_3$ may have a contact angle of about 108 or 120 degrees, respectively.

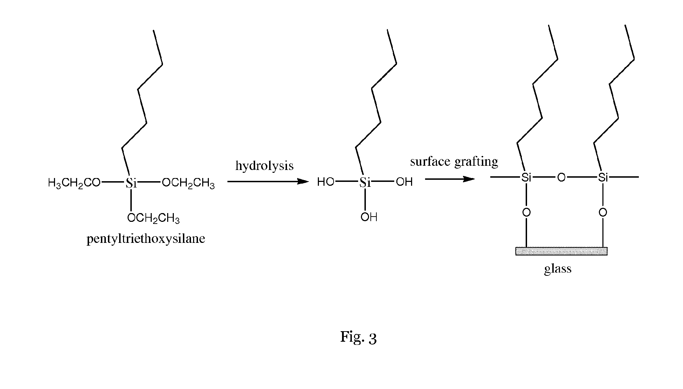

In certain exemplary embodiments, pentyltriethoxysilane (PTEOS) and/or 3,3,3,-trifluoropropyl trimethoxysilane (TFTMOS) may be used to modify the surface of an AR coating in order to increase its contact angle. For example, Fig. 3 is a schematic illustration of the surface modification of an AR coating with PTEOS in accordance with certain example embodiments. As can be seen in Fig. 3, the silane undergoes hydrolysis, and some of the hydrolyzed silane bonds to the surface of the AR coating. In certain example embodiments, through this bond, the silanes may orient themselves in a manner such that the pentyl (alkyl) group is proximate the outermost surface of the modified AR coating. The terminal group in the pentyl group, closest to the surface of the modified AR coating, is a $CH_3$ (methyl). In certain example embodiments, this may contribute to raising the contact angle of the modified surface, as the contact angle for a $CH_3$

group is higher than that of the unmodified AR coating.

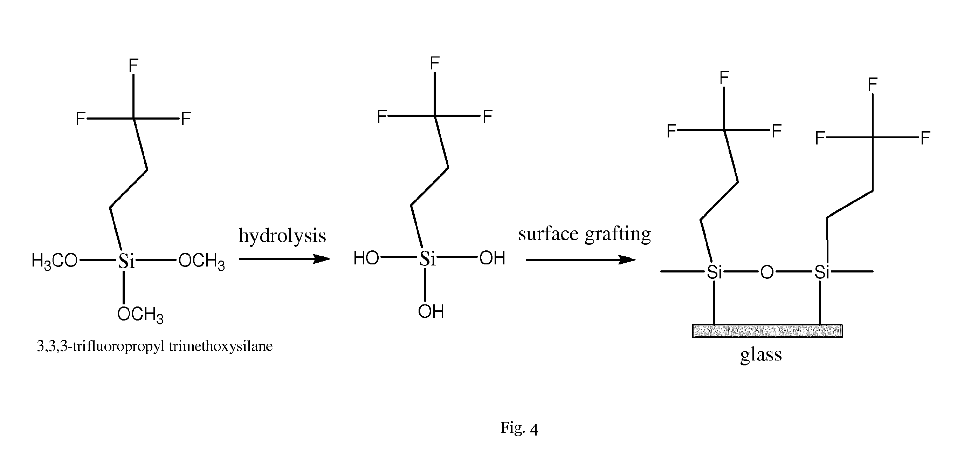

Fig. 4 is a schematic illustration of the surface modification of an AR coating with TFTMOS in accordance with certain example embodiments. As can be seen in Fig. 4, the silane undergoes hydrolysis, and then some of the hydrolyzed silane bonds to the surface of the AR coating. Through this bond, the silanes orient themselves in a manner such that the ethyl, 1-trifluoromethyl group is proximate the outermost surface of the modified AR coating. The terminal group in the ethyl, 1-trifluoromethyl group, closest to the surface of the modified AR coating, is a carbon trifluoride group ($CF_3$). In certain example embodiments, this will raise the contact angle of the modified surface, as the contact angle for a $CF_3$ group is much higher than that of the unmodified AR coating.

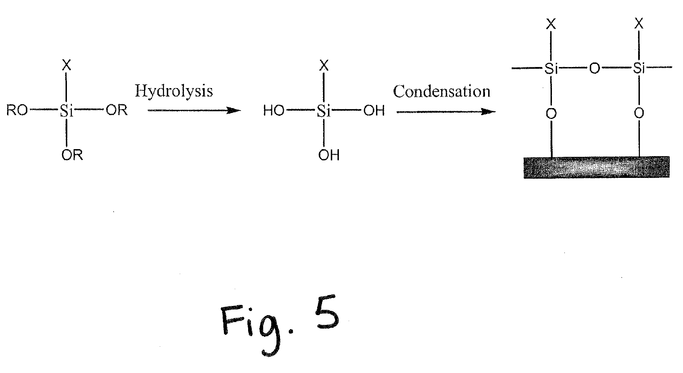

Fig. 5 is a schematic illustration of the surface modification of an AR coating with a silane comprising an alkyl group and/or a fluoroalkyl group in accordance with certain example embodiments. It can be seen from Fig. 5 that since the OR groups attached to the silicon atom are hydrolyzed to form Si(OH)3-R, the identity of the R in the OR groups may not be significant to the mechanism of this reaction. Furthermore, so long as group X comprises an alkyl and/or fluoroalkyl functional group, the same mechanism may be expected in certain examples. Accordingly, in certain example embodiments any silane including an alkyl and/or fluoroalkyl group X directly bonded to the silicon atom may be used to modify the surface of an AR coating to increase its contact angle.

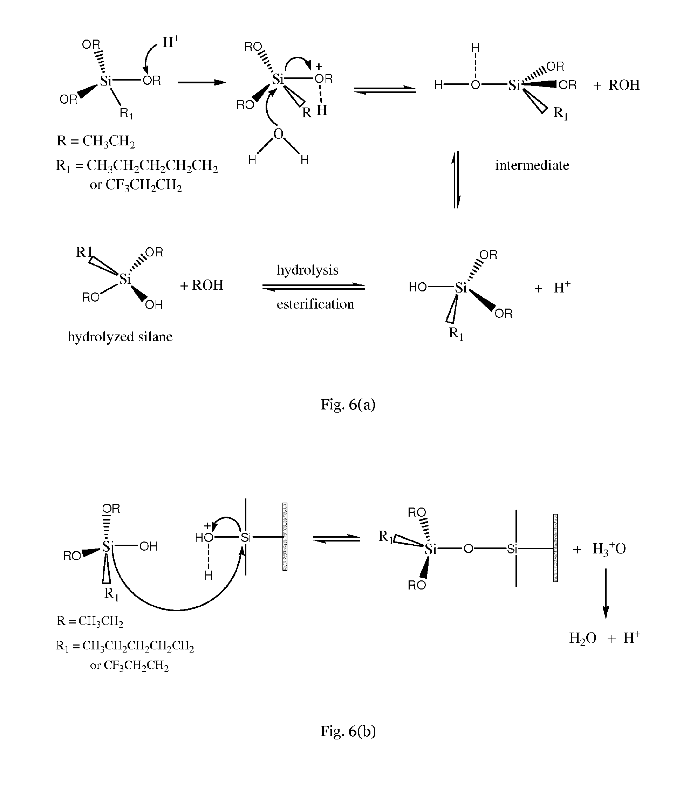

Fig. 6(a) perhaps more clearly illustrates an example mechanism for the hydrolysis of the silane. In certain example embodiments, a silane may be hydrolyzed by SN2 mechanisms in the presence of an acid. In Fig. 6(a), the electrophilicity of the Si atom is enhanced by the attack of a proton, H+ (released from an acid such as, for example, acetic acid), on an OR group of the silane. The intermediate shown in Fig. 6(a) is generated by the reaction of water with an Si atom. The reaction intermediate may produce the hydrolyzed silane, and releases a proton H+. The proton can be used again as a catalyst. This process may be repeated in certain embodiments to generate various states of hydrolyzed silane. In certain example embodiments, the hydrolysis of silane may be a reversible reaction. Esterification may occur in the process in some cases. In certain example embodiments, "R" may comprise $CH_3CH_2$, and "R1" may comprise $CH_3CH_2CH_2CH_2CH_2$ or $CF_3CH_2CH_2$. However, in other example embodiments, R may represent any organic compound and R1 may represent any alkyl and/or fluoroalkyl group.

In certain example embodiments, the surface of the AR coating may be exposed to the silane-based solution for a period of from about 1 minute to 4 hours, more preferably from about 1 minute to 2 hours. The solution may be coated on the substrate via sol gel deposition processes such as dip coating and/or spin coating, in certain example embodiments. In other example embodiments, the substrate may be fully immersed in the solution for the duration of the reaction.

In certain example embodiments, the silane-based compound may be in a solution with a solvent. In certain examples, the silane-based compound may make up from about 1 to 20% of the solution by volume, more preferably from about 1 to 10%, and most preferably from about 2 to 5% by volume, with an example percentage being about 2.4% by volume. In certain example embodiments, the solvent may comprise toluene. However, in other example embodiments, the solvent may comprise any suitable organic material.

In certain example embodiments, the solution comprising the silane based compound may be maintained at or proximate to the boiling point of the solvent throughout the duration of reaction. In further example embodiments, the solution may be maintained at a temperature of from about 75 to 150 degrees C, more preferably from about 90 to 120 degrees C, with an example temperature being about 110 degrees C.

Fig. 6(b) illustrates an example mechanism of condensation of a hydrolyzed silane with a hydroxyl group on the surface of an AR coating. As can be seen from the product, the R1 group ends up proximate the outermost surface of the modified AR coating. Accordingly, in certain example embodiments, the contact angle and/or hydrophobic properties of the R1 group may affect the overall contact angle of the modified surface of the coating.

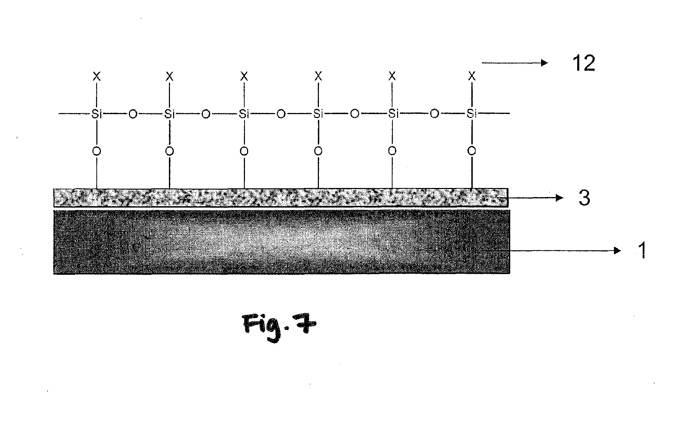

Fig. 7 is a schematic view of an AR coating that has been modified by chemically grafting the surface with a silane in accordance with certain example embodiments. Fig. 7 shows glass substrate 1, with AR coating 3 disposed thereon. The surface of AR coating 3 has been modified (e.g., chemically grafted) such that it comprises silane molecules comprising functional group X (where X comprises an alkyl and/or fluoroalkyl group). In certain example embodiments, region 12 of the modified surface may be hydrophobic. Fig. 7 is not drawn to scale, as the surface modifications would only be visible on a microscopic level in certain embodiments.

In certain example embodiments, the contact angle of a modified AR coating such as that shown in Fig. 7 may be at least about 75 degrees, more preferably at least about 85 degrees, and most preferably at least about 100 degrees, and in certain example embodiments, the contact angle may even exceed about 110 or 120 degrees.

In certain example embodiments, an example method for treating the surface of an AR coating with a silane comprising an alkyl and/or fluoroalkyl group may cause the contact angle of the surface of the AR coating to increase by at least about 80 degrees, more preferably by at least about 90 degrees, and most preferably by at least about 100 degrees, in certain example embodiments.

In certain example embodiments, the measurement of the contact angle of a hydrophobic surface may be conducted with a contact angle instrument (FTA 135) at or proximate room temperature. One sessile drop of deionized

water (~6μl) may be wetted on the surface of the coating and/or substrate, and the contact angle may be measured. The reported contact angle data will include the average values measured from three different points on the surface. In other example embodiments, the contact angle of a hydrophilic surface may be analyzed via FTA 136. The calculation of the contact angle is performed by software (FTA, version 1.966) and may be further confirmed by the following equation:

$$\theta = 2\tan^{-1}\left(\frac{2h}{\Delta}\right)$$

where θ is the contact angle, and Δ and h are the base length and the height of the water droplet wetted on the surface of the coating/substrate, respectively.

In certain example embodiments, a higher contact angle may be achieved by a low surface energy and high surface roughness. The low surface energy of the R1 group may assist in the modified surface of the AR coating achieving a high contact angle. However, in certain example embodiments, an increased surface roughness may also contribute to a further increased contact angle (e.g., at least about 75 degrees, more preferably at least about 85 degrees, and most preferably at least about 100 degrees, and in some cases even about 110 or 120 degrees or higher).

In certain examples, the topography (e.g., roughness or lack thereof) of the surface of an AR coating after modification may be evaluated quantitatively and qualitatively. An atomic force microscope (AFM, AP-0100, Parker Sci. Instrument) may be used to qualitatively evaluate the surface morphology. In certain cases, the non-contact method, which may be preferred for soft surfaces, may be used. A sample size of about 1 cm$^2$ may be used, and the scanning area may be about 20 μm by 20 μm. The scanning rate may be about 0.3. In certain example embodiments, the roughness of a surface may be characterized quantitatively by measuring the root mean square roughness ($R_m$). The definition of $R_m$ is described in the following equation:

$$R_m = \sqrt{\left(\frac{1}{n}\sum_{i=1}^{n} y_i^2\right)}$$

where $y_i$ is the height of the peak in the AFM image.

In certain example embodiments, an average root mean square (or RMS) roughness value of the modified AR coating may be at least about 5 nm, more preferably at least about 6 nm, and most preferably at least about 7 nm, and in some cases even higher. In some cases, the root mean surface roughness of the coating may depend on the length of the reaction.

In certain cases, when a surface becomes rough, the contact angle of the surface may be described with one of two models, depending on whether air may be trapped inside of the grooves of the rough surface (e.g., in between the peaks and valleys).

On a flat, smooth, and chemically homogeneous surface, the contact angle θ may be given by Young's equation:

$$\cos\theta = \frac{\gamma_{sv} - \gamma_{sl}}{\gamma_{lv}}$$

where $\gamma_{sv}$, $\gamma_{sl}$, and $\gamma_{lv}$ are the solid-vapor, solid-liquid, and liquid-vapor surface tensions, respectively.

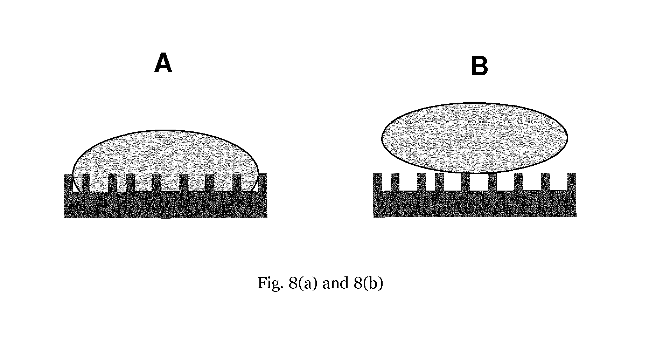

Figs. 8(a) and 8(b) help show the effects that trapping air inside a roughened surface may have on contact angles. Fig. 8(a) illustrates the Wenzel approach. Wenzel's approach emphasizes that the grooves of a rough surface may be wetted by a water drop. According to Wenzel's approach (which does not assume or account for air trapped in the grooves), the contact angle may be described as:

$$\cos\theta_\omega = r\cos\theta$$

where r is the roughness factor, $\theta_\omega$ is the contact angle of the rough surface, and θ is the contact angle of the flat surface. This equation implies that if the intrinsic contact angle of a liquid on a rough solid surface is larger than 90 degrees, the surface will tend to become super-hydrophobic, and that if the contact angle is smaller than 90 degrees, the surface will tend to become super hydrophilic because the r-value is greater than 1.

Another example model, developed by Cassie, is illustrated in Fig. 8(b). The Cassie model assumes that air can be trapped inside the grooves of the rough surface, and that the drop of water/liquid sits partially on air. In certain example embodiments, the contact angle of a drop of liquid that sits on roughness peaks (e.g., and partially on air), is given by Cassie's equation:

$$\cos\theta_c = \varphi\cos\theta - (1-\varphi)$$

where $\varphi$ is the area fraction of solid-liquid contact, $\theta_c$ is the contact angle of a rough surface and $\theta$ is the contact angle of a flat surface. Under Cassie's model, the air trapped under the liquid drops tends to render the surface slipperier and increases the contact angle.

In certain example embodiments, the surface of an AR coating (unmodified) may be similar to Wenzel's model, since the contact angle of an unmodified AR coating is not very high.

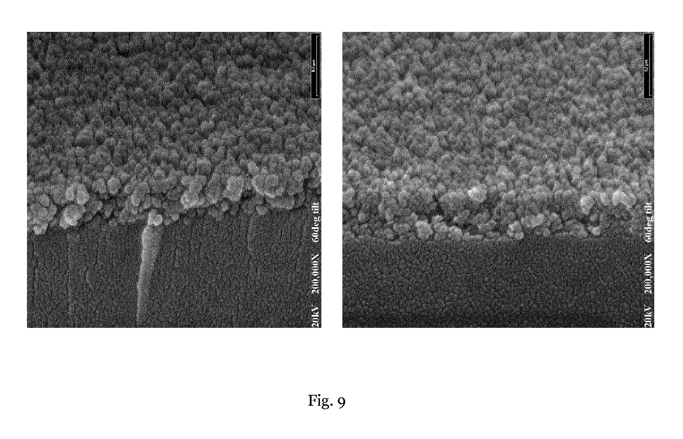

In certain example embodiments, the surface of an uncoated glass substrate may be relatively smooth (e.g., and thus may have a relatively low surface roughness). However, because of the structure and/or composition of an AR coating, the surface of an AR coating may possess a higher surface roughness than the surface of an uncoated glass substrate, in certain cases. For example, Fig. 9 provides scanning electron microscope (SEM) images of the surface of AR coatings. The roughness of the AR coating in Fig. 9 is clear from the pictures. In certain example embodiments, this may be related to random geometric package of elongated $SiO_2$ nanoparticles resulting in a rougher surface. However, in other example embodiments, the increased surface roughness of an AR coating as compared to an uncoated glass substrate may be related to different features of the AR coating.

According to Wenzel's model, the roughness attributable to an AR coating may enable the modified surface (e.g., after the grafting process) to reach a higher contact angle than when the same grafting process is performed on the less-rough (e.g., substantially flat) surface of a glass substrate.

In certain instances, the contact angle of the surface of an uncoated and untreated glass substrate may be from about 15 to 35 degrees. The contact angle of the surface of an unmodified AR coating, on the other hand, may be less than about 25 degrees in some cases. In certain other instances, the contact angle of an unmodified AR coating may be less than about 10 degrees, and sometimes even as low as 6 degrees.

In certain example embodiments, if the substantially flat surface of an uncoated glass substrate were treated with a silane by the grafting processes described herein, the contact angle of an uncoated glass substrate may be from about 50 to 90 degrees, more particularly from about 60 to 80 degrees, and with an example of 69.9 degrees. Thus, the contact angle of the uncoated substrate may be increased by about 30 to 60 degrees, with an example being about 45 degrees.

However, in certain example embodiments, if the surface of an AR coating disposed on a glass substrate (the surface having a greater roughness than the flat uncoated surface of a substrate) is treated with a silane via the example grafting techniques described herein, the contact angle of the modified surface of the AR coating may be from about 90 to 170 degrees, with example sub-ranges being from about 100 to at least about 135 degrees and from about 110 to 125 degrees. The contact angle of the AR coating may be increased by about 70 to 165 degrees, with example sub-ranges of about 80 to 130 degrees and about 90 to 120 degrees. The increase in contact angle when modifying the surface of an AR coating, then, is significantly greater than the increase in contact angle when treating an uncoated substrate.

Thus, if the same or substantially similar grafting process is performed on a flat surface, the increase in contact angle may be significantly less than the increase in contact angle achieved by performing the same grafting process on a surface having a greater roughness, in some cases. This indicates that in certain examples, a surface having a higher initial roughness may experience a higher rise in contact angle as compared to the rise in contact angle for a smoother surface that undergoes the same or substantially the same treatment.

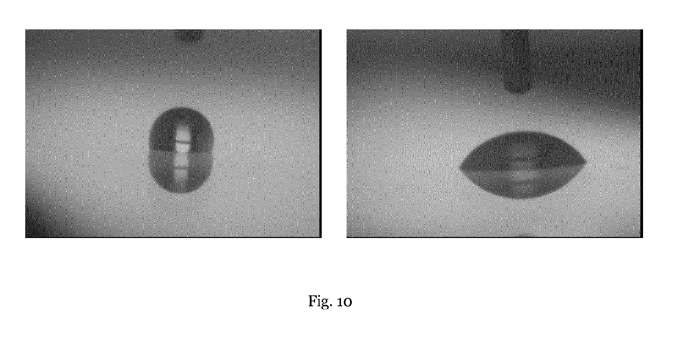

This is further illustrated in Fig. 10. On the left, Fig. 10 shows a drop of water on the surface of a modified AR coating (disposed on a glass substrate). On the right, Fig. 10 shows a drop of water on the surface of a treated but uncoated glass substrate. Fig. 10 shows that the contact angle of the modified AR coating is much higher than that of the modified/treated but uncoated glass substrate.

Thus, in certain example embodiments, the surface roughness imparted by an AR coating in connection with the low surface energy of the modified surface of the AR coating achieved by example methods of grafting with a silane may result in a modified AR coating having a contact angle of at least about 75 degrees, more preferably at least about 85 degrees, and most preferably at least about 100 degrees, and possibly even about 110 or 120 degrees or higher, in certain example embodiments.

Accordingly, in certain example embodiments, the increased roughness of an AR coating in conjunction with modifying the surface of the AR coating by grafting the surface with a silane may enable a modified AR coating to be hydrophobic and/or super-hydrophobic, and comprise a significantly increased contact angle, as well as improved anti-fogging and/or anti-soiling properties.

Furthermore, in certain example embodiments, modifying an AR coating surface to become hydrophobic and/or super-hydrophobic may not significantly affect the coated article's optical properties and/or durability.

For example, in certain example embodiments, a modified AR coated article may have a light transmittance (Tqe%) of at least about 90%, more preferably at least about 92%, and most preferably at least about 93.5%.

The Tqe% of a substrate may be measured by UV-Vis spectroscopy (PE-1050) from 400 to 1200 nm, and the average Tqe% may be calculated by the following equation:

$$T_{qe}\% = \frac{\sum_{i=400}^{1200}(T_{qe}\%)_i}{\sum_{i=400}^{1200}N_i}$$

The transmission gain, $\Delta$Tqe%, of a coated substrate as compared to an uncoated substrate may be evaluated by subtracting the Tqe% of raw glass from the Tqe% of coated glass. Similarly, any change in transmission as between a coated substrate with a modified AR coating versus a coated substrate with an unmodified AR coating may be evaluated in the same manner (e.g., by subtracting the Tqe% of the modified AR-coated article from that of the unmodified AR coated article).

In certain cases, the Tqe% of the modified AR coated article will be within at least about $\pm$1% of the Tqe% of an unmodified AR coated article, more preferably within at least about $\pm$0.5%, and most preferably, within at least about $\pm$0.1%. In other words, any Tqe% losses in a coated article comprising a modified AR coating, as compared to a substrate comprising an unmodified AR coating, will be less than about 1%, more preferably less than about 0.5%, and most preferably less than about 0.1%. Thus, the transmission of an article comprising a modified AR coating will not significantly differ from that of an article comprising an unmodified AR coating.

Furthermore, in certain example embodiments, the surface treatment (e.g., chemical grafting) method performed on an AR coating may not significantly alter the thickness and/or refractive index of the AR coating. Additionally, a modified AR coating may still pass a water boil test, NaOH test, and tape pull test, in certain example embodiments. In other words, in certain example embodiments, modifying the surface of an AR coating with a silane (e.g., a silane comprising at least an alkyl and/or fluoroalkyl group) according to certain example techniques disclosed herein may advantageously increase the surface's contact angle, rendering it hydrophobic and/or super-hydrophobic with improved anti-fogging and/or anti-soiling properties, without significantly altering the AR coating's transmission, refractive index, thickness, and/or durability.

EXAMPLES

Several example surface modifications were carried out in order to determine the properties of the modified AR coatings.

First, anti-reflection coatings were disposed upon glass substrates. Anti-reflection coatings may be formed according any method. In certain examples, the AR coating may be formed via the combustion of carbon-based structures disposed in a silica-based layer in order to create a porous silica based matrix, and as further described in U.S. Application Serial No. 13/360,898, filed on January 30, 2012, incorporated herein by reference in its entirety. In other example embodiments, the AR coating may comprise mesoporous metal oxide and/or silica-based nanoparticles, as further described in U.S. Application Serial No. 13/361,754, filed on January 30, 2012, incorporated herein by reference in its entirety. In further example embodiments, the coating may be graded with respect to porosity.

In this example, the formulation of the sol was as follows:

| Chemicals | M.W. (g/mol) | wt% | Mol ratio |
|---|---|---|---|
| n-propyl alcohol | 60.1 | 69.714 | 1.000 |
| Deionized water | 18 | 1.808 | 0.070 |
| Acetic acid (AcOH) | 60.05 | 4.890 | 0.056 |
| Tetraethyl orthosilicate (TEOS) | 208.33 | 3.637 | 0.012 |

(continued)

| Chemicals | M.W. (g/mol) | wt% | Mol ratio |
|---|---|---|---|
| Nano silica particles | N/A | 19.951 | - |
| Total | - | 100 | - |

In this example, the solid percentage described as SiO2 wt % calculated from TEOS and silica nanoparticles was about 4 wt.%. In certain instances, e.g., depending upon the coating process, the solid percentage of the sol could be from about 0.1 to 20%, more preferably from about 0.2 to 15%, and most preferably from about 0.4 to 10% (all wt. %). Accordingly, the solvent may be present in a range from about 50 to 99%, more preferably from about 65 to 99%, and most preferably from about 70 to 97%.

In certain instances, when TEOS is used as a binder, the amount of TEOS present may range from about 0.01 to 30 mol.%, more preferably from about 0.1 to 25 mol.%, and most preferably from about 0.3 to 20 mol.%.

Acetic acid may be used as a catalyst in certain example embodiments, and the catalyst (e.g., acetic acid) may be present in an amount of from about 0.001 to 20 mol. %, more preferably from about 0.001 to 10 mol.%, and most preferably from about 0.01 to 7 mol.%. In certain examples, the molar ratio of water to silica may be from about 0.5 to 100, more preferably from about 1.0 to 75, and most preferably from about 1.1 to 50.

The nano silica particles included ~15 wt. % amorphous silica, ~85 wt. % isopropanol, and <1 wt. % water. The elongate particles had a diameter or major distance of 9-15 nm, length of 40-100 nm, and the OH group in the silica nanoparticles were present at a rate of 5-8 OH/nm$^2$.

In certain example embodiments, spherical silica nanoparticles may be used instead of or in addition to the elongated silica nanoparticles. For example, spherical silica nanoparticles such as ORGANOSILICASOL™ (Nissan Chemical) may also be used for making an anti-reflection coating. In certain example embodiments, the diameter or major distance of generally spherical silica nanoparticles may be from about 2 to 200 nm, more preferably from about 5 to 100 nm, and most preferably from about 10 to 100 nm. Further, the range of spherical silica nanoparticles in solution (in terms of weight %) may be from about 10 to 50%, more preferably from about 15 to 45%, and most preferably from about 20 to 40%. In certain example embodiments, the weight % of spherical silica nanoparticles in solution may correspond to 80 to 60% of the solvent used in the silica solution. In some instances, small amounts of water may also be present in the silica nanoparticle-based solution. For example, the solution may include from about 0 to 5% (by wt or mol %) water, more preferably from about 0.01 to 5%, and most preferably from about 0.3 to 3% water may be present in the nanoparticle-based solution.

In certain example embodiments, the solvent used in a silica solution may be of or include an alcohol. For example, the alcohol may be isopropanol, methanol, ethanol, and/or the like. In other example embodiments, a solvent such as N,N-dimethyl acetamide, ethylene glycol, ethylene glycol mono-n-propyl ether, methyl ethyl ketone and methyl isobutyl ketone may be used. In certain non-limiting exemplary embodiments, water-based silica nanoparticles, such as SNOWTEX from Nissan Chemical can be applied in fabrication of an anti-reflection coating, in which the size of silica nanoparticles is from about 10 to 100 nm and the nanoparticles are present in an amount of from about 20 to 40% by weight.

Spin coating was used for this example, although other deposition techniques are of course possible. Spin coating was performed at 1300 rpm, with a ramp of 225 rps for 30 seconds. 2 ml of sol was added on the surface of the AR glass, and held on the stage with a vacuum. The coated glass was cured in a furnace for 3.5 min. at 650 degrees C, after the spin coating.

The coated glass substrates were washed with Sparkle and soap, then rinsed with deionized water and dried with N$_2$ gas. A sol comprising N-propyl alcohol, acetic acid, tetraethyl orthosilicate, and silica nanoparticles (comprising amorphous silca, isopropanol, and water) was formed. The AR coating was deposited via spin coating. The coating is then cured to form a coated substrate. AR coatings were formed on both solar float glass (SFO) and matte finish glass (MM).

The surface modification was performed as follows: The coated glass substrates were pre-cleaned by soaking the glass in a solution comprising 1% HCl and 1% HNO$_3$ for 30 minutes at room temperature. Then the coated substrates were rinsed with deionized water and dried by N$_2$ gas. The grafting solution comprising toluene and silane was prepared by adding 80 mL of toluene in a 100mL round flask. The flask was heated to the boiling point of toluene (approximately 110 degrees C). After 30 minutes of boiling, 2 mL of silane were added to the flask. The pre-cleaned articles were then dipped in the grafting solution of toluene and silane (toluene:silane present in an 80:2 volume ratio). After varying reaction times, the articles were removed from the flask and rinsed with IPA and deionized water.

The surface modification was performed with grafting solutions comprising both 3, 3, 3-trifluoropropyl trimethoxysilane (TFTMOS, Gelest) and pentyltriethoxysilane (PTEOS, Gelest) as the silane, respectively. The TFTMOS and PTEOS were used without purification. The toluene was purchased from Aldrich (99%). The deionized water, nitrogen gas, solar float glass (SFO, 3.2 mm) and Matte/Matte glass (MM, 3.2 mm) are from Guardian.

Evaluation:

The contact angles of untreated and treated glass substrates were measured. These results are presented in Table 1:

Table 1

| Glass | Modified by Silane | Contact Angle |
|---|---|---|
| Uncoated SFO | NO | 23.3 |
| Uncoated treated SFO | Yes, PTEOS | 69.9 |
| AR coated SFO, untreated | NO | 6.91 |
| AR coated SFO | Yes, PTEOS | 125.5 (2 hr rxn time) |
| AR coated SFO | Yes, TFTMOS | 118 (2 hr rxn time) |

In Table 1, the AR coatings disposed on the SFO substrates were disposed on its air side. As can be seen from Table 1, the silane surface modification causes all initial contact angles to increase. However, as explained above, low surface energy and high surface roughness both may contribute to a hydrophobic surface (e.g., higher contact angle) in certain examples. The roughness of the AR coating enables the contact angle to be increased by over 100 degrees when the surface is modified, whereas the contact angle of the uncoated glass substrate only increases by about 45 degrees upon modification.

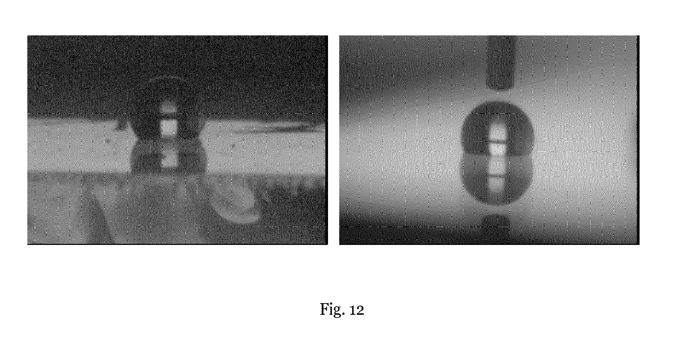

Fig. 12 shows two water droplets in contact with two surfaces. The left picture shows a water droplet on an AR coating modified by PTEOS, where the PTEOS concentration in toluene was 2.4%, and the reaction occurred for 2 hours at 110 degrees C. The picture on the right shows a water droplet on an AR coating modified by TFTMOS. As can be seen from Fig. 12, surface modification processes performed by both silanes effectively increase the contact angle of the surface of the AR coating.

Table 2 illustrates the effect of surface roughness on the contact angle of a surface after modification with silane. The substrates were treated with PTEOS, for 30 minutes, at 110 degrees C, in a 2.4% PTEOS (in toluene) solution.

Table 2

| Glass | Contact Angle (degrees) | R ($\cos\theta_\omega/\cos\theta$) |
|---|---|---|
| SFO uncoated (air side) | 69.9 | 1.357 |
| SFO AR coated (air side) | 113.3 | |
| MM uncoated (smooth side) | 82.6 | 1.648 |
| MM AR coated (smooth side) | 107.3 | |

Table 2 illustrates that roughness factor of MM glass may be higher than that of SFO glass. The MM glass may possess an intrinsic roughness, evidenced by its initial contact angle being higher than that of uncoated SFO glass.

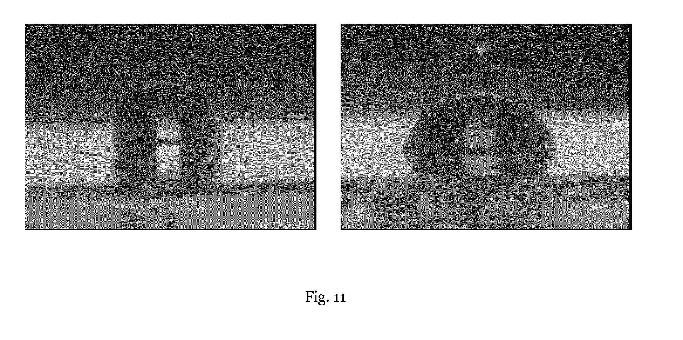

Figs. 10 and 11 also illustrate the results of Table 2. Fig. 10, discussed above. The left picture shows the contact angle of water on an SFO glass substrate coated with an AR coating on its air side, modified by PTEOS (113.3 degrees). On the right, Fig. 10 shows the contact angle of water on an SFO uncoated glass substrate, modified by PTEOS (69.9 degrees). The reaction time was 2 hours, the concentration of PTEOS in toluene was 2.5%, and the temperature was 110 degrees C.

Fig. 11, also discussed above, illustrates the contact angle of water on the smooth side of MM glass. The picture of the left is the contact angle of the modified AR coating, and the picture on the right is of the contact angle of the uncoated MM glass substrate. The contact angle of the modified AR coating is 107.3 degrees, and the contact angle of the modified uncoated glass surface is 82.6 degrees.

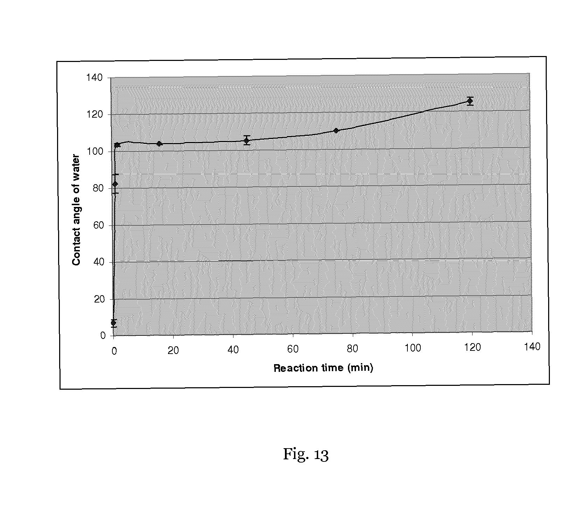

Fig. 13 is a graph illustrating the contact angle of water on a modified surface versus the reaction time. In other words, it shows the change of the contact angle as the reaction time increases when PTEOS is used as a surface modifier. During the experiment illustrated in Fig. 13, the concentration of PTEOS was 2.4% in toluene, and the temperature was 110 degrees C. Fig. 13 shows that the contact angle of the surface rapidly increased from 6.9 degrees to 82.5 degrees within the first minute. The increase in contact angle then slowed substantially, and peaked after about 2 hours.

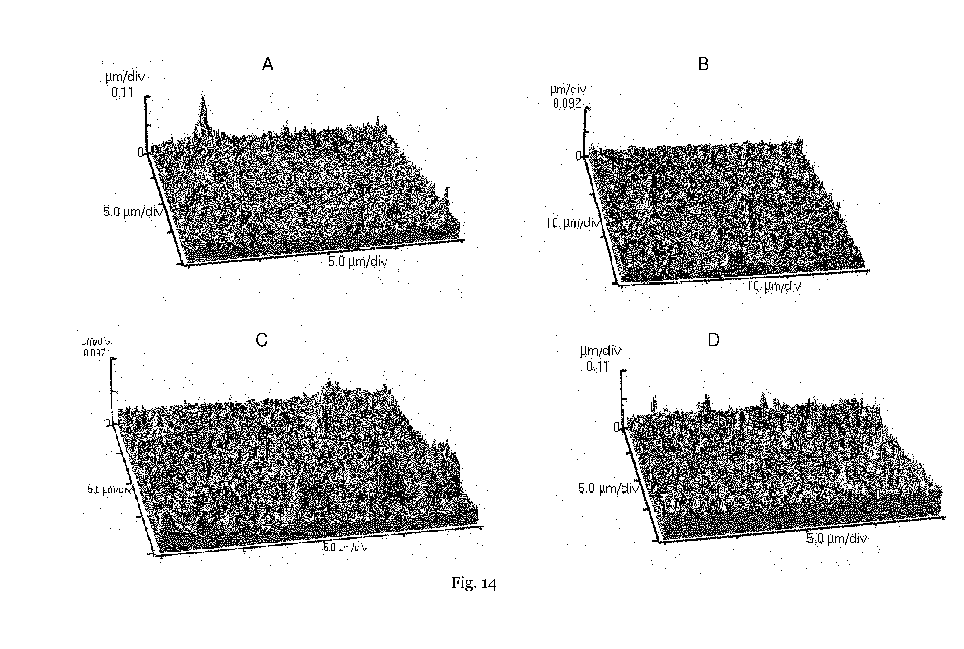

The change in contact angle with increasing reaction time is also illustrated in Figs. 14(A)-14(D) and described in Table 3. Figs. 14(A)-(D) are AFM images of SFO AR coated glass modified by PTEOS at different reaction times. The AFM images in Figs. 14(A)-14(D) show a rough surface; however, the surface roughness appears to increase with reaction time. Table 3 confirms this with data taken periodically during surface modification at points A, B, C, and D.

Table 3

| Sample | Reaction time (min) | Rm (nm) |
|---|---|---|
| N/A | 0 | 4.068 |
| A | 1 | 5.156 |
| B | 2 | 5.126 |
| C | 75 | 7.494 |
| D | 120 | 8.158 |

As can be seen from Table 3, $R_m$ increases as the reaction time progresses. The increase of $R_m$ may be attributable to more and more silane being grafted onto the surface of the AR coating. This will eventually increase the roughness of the surface in certain example embodiments.

The transmittance of the modified AR coated substrates was also measured with respect to increasing reaction time. The results are shown in Table 4 below. The results in Table 4 are from SFO glass substrates with AR coatings.

Table 4

| Reaction Time (min) | Tqe% | ΔTqe% |
|---|---|---|
| 0 | 93.627 | - |
| 1 | 93.591 | -0.036 |
| 2 | 93.538 | -0.089 |
| 16 | 93.536 | -0.091 |
| 45 | 93.544 | -0.083 |
| 75 | 93.558 | -0.069 |
| 120 | 93.535 | -0.092 |

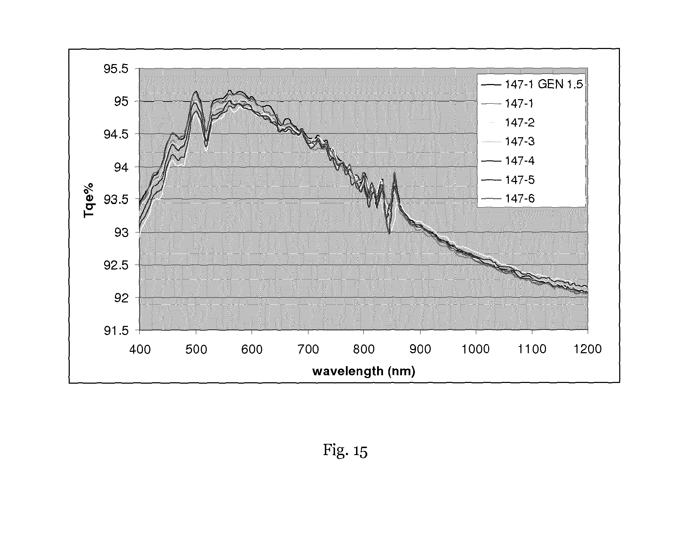

Table 4 shows a minor decrease in Tqe% of an AR coating modified by PTEOS with increasing reaction time. However, this minor decrease may be attributable to the error range of measurement, as it is so small. Fig. 15 is a graph showing the transmittance curve of an example modified AR coated glass substrate over increasing reaction times. The curves are very similar, and maintain the same peaks. These results indicate that there is no damage to the AR coating during the surface modification process. This may be due to the cross-linked network generated over the AR coating's surface shown in Fig. 6.

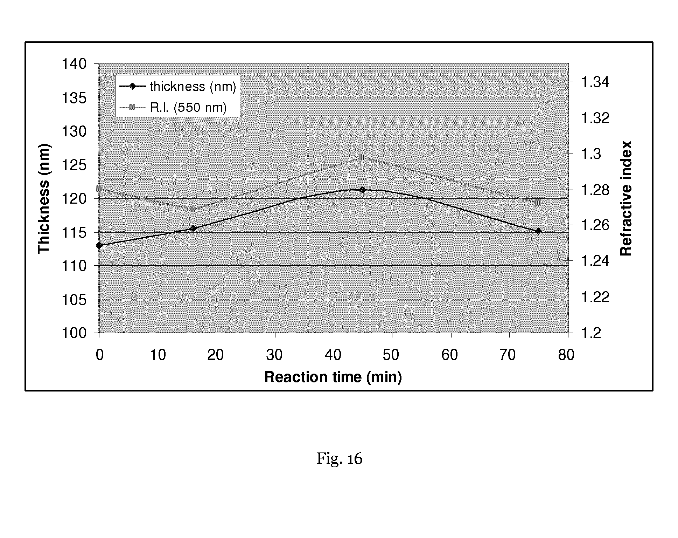

The thickness and the refractive index of the AR coating modified by PTEOS were also measured over a period of reaction time. The optical thickness and refractive index of the AR coating were measured by Ellipsometer (JA Woollan Co, HS-190). The multiple angles were used to scan samples to measure the complex reflectance ratio, p, which is parameterized by $\Psi$ and $\Delta$. The refractive index of the coated article was reported at a wavelength of 550 nm. These results are illustrated in Fig. 16. Fig. 16 illustrates that there is no significant change for both thickness and refractive index with increasing reaction time, which is consistent with the results showing no significant change in transmittance.

The following durability tests were also performed:

A water boil test was performed. The coated article was immersed in one beaker filled with deionized water at 100 degrees C. After a certain time, the AR glass was removed from the boiling water, and dried by $N_2$ gas, before UV-vis measurement. The Tqe% change of the coated article was calculated by the difference of Tqe% before and after the water boil test. The specification of the water boil test is $\pm 0.5\%$.

The durability of different AR coated substrates modified by PTEOS evaluated by a water boil test is summarized in Table 5 below:

Table 5

| Glass | Water boil (min) | Tqe% post-test | Peak (nm) | ΔTqe% | Δpeak (nm) |
|---|---|---|---|---|---|
| Unmodified AR coated article | 0 | 93.994 | 620 | n/a | n/a |
| " | 10 | 94.059 | 625 | 0.065 | 5 |
| " | 30 | 93.998 | 625 | 0.004 | 5 |
| " | 60 | 93.913 | 640 | -0.081 | 20 |
| " | 120 | Film can be peeled off during cleaning with IPA | | | |
| Modified AR coated article | 0 | 94.006 | 665 | | |
| " | 10 | 94.103 | 690 | 0.097 | 25 |
| " | 30 | 94.067 | 690 | 0.061 | 25 |
| " | 60 | 94.036 | 720 | 0.030 | 55 |
| " | 120 | Film can be peeled off during cleaning with IPA | | | |

The modified coating was prepared by immersing in PTES, 2.4 vol.% in toluene, for 1 hour. The data was collected by removing the sample from the beaker at a certain time, testing it with UV-vis spectroscopy, and then putting it back in the beaker.

Both AR-coated substrates with modified and unmodified surfaces passed the water boil test from 10-60 minutes. The AR coating was peeled off from the glass when cleaning with IPA after 120 minutes of test. The water boil test data illustrates that the AR coatings modified by PTEOS may have similar thermal stability as the original (e.g., unmodified) AR coatings.

An NaOH test was also performed. The coated article was set in a beaker filled with NaOH solution (0.1N) at room temperature. After 1 hour, the glass was taken from the solution, and was washed by deionized water and dried by $N_2$ gas. The Tqe% change of AR glass is measured by the difference of Tqe% before and after the NaOH test. The specification of the NaOH test is ±0.5%.

In the NaOH test, the Tqe% pre-test was 93.558, and after the test it was 93.287. The ΔTqe% was therefore -0.272, which is within the range of ±0.5%. Thus, the modified AR coated article passes the NaOH test.

A Tape Pull test was also performed. The tape (3179C, 3M) is stuck on the AR coating surface by pressing the tape down with the finger. After 1.5 minutes, the tape is pulled out quickly by hand, and the residual tape adhesive is removed with tissue paper (Accu Wipe) soaked with IPA. The Tqe% change of AR glass will be calculated by the difference of Tqe% before and after the tape pull test. The specification of the tape pull test is ±1.5%.

In the Tape Pull test, the Tqe% pre-test was 93.544, and after the test it was 93.447. The ΔTqe% was therefore -0.097, which is well within the range of ±1.5%. Thus, the modified AR coated article passes the Tape Pull test.

Certain example embodiments described herein relate to methods of chemically grafting the surface of an AR coating with a silane comprising at least an alkyl and/or fluorinated alkyl group. These chemical grafting methods are effective in changing an AR coating surface from hydrophilic to hydrophobic. A contact angle reaching and/or exceeding 100 degrees may be achieved in certain example embodiments. Pentyletriethoxysilane and 3,3,3-trifluoropropyl trimethoxysilane are illustrative examples of silane-based compounds that may be used for surface modification; however, any silane comprising an alkyl and/or fluoroalkyl group may be used. The optical characteristics and/or durability of the modified AR coating are substantially similar to those of unmodified AR coatings, in certain example embodiments. Therefore, certain example methods disclosed herein may advantageously be used to produce AR coatings with improved hydrophobic characteristics and properties without compromising optical and/or mechanical properties of the coating.

While a layer, layer system, coating, or the like, may be said to be "on" or "supported by" a substrate, layer, layer system, coating, or the like, other layer(s) may be provided therebetween. Thus, for example, the coatings described herein may be considered "on" and "supported by" the substrate and/or other coatings even if other layer(s) are provided therebetween.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

In the following preferred embodiments are described to facilitate a deeper understanding of the invention:

Embodiment 1. A method of making a coated article, the method comprising:

modifying a major surface of an antireflection coating supported by a glass substrate by treating said coating with a solution including a silane comprising at least one alkyl and/or fluoroalkyl functional group, such that the modified surface has a contact angle of at least about 85 degrees following said treating.

Embodiment 2. The method of embodiment 1, wherein the modified surface has a contact angle of at least about 100 degrees.

Embodiment 3. The method of any preceding embodiment, further comprising treating the coating with the silane-based solution for at least about 1 hour.

Embodiment 4. The method of any of embodiments 1-2, further comprising treating the coating with the silane-based solution for at least about 2 hours.

Embodiment 5. The method of any preceding embodiment, wherein said treating causes an initial contact angle of the major surface to increase by from about 90 to 120 degrees.

Embodiment 6. The method of any preceding embodiment, wherein the silane comprises an alkyl group.

Embodiment 7. The method of embodiment 6, wherein a terminal end of the alkyl group comprises a methyl group.

Embodiment 8. The method of any of embodiments 1-5, wherein the silane comprises a fluoroalkyl group.

Embodiment 9. The method of embodiment 8, wherein a terminal end of the fluoroalkyl group comprises carbon trifluoride.

Embodiment 10. The method of any of embodiments 6-7, wherein the silane is oriented in such a manner that the alkyl group is oriented proximate to an outermost portion of the modified surface of the anti-reflection coating.

Embodiment 11. The method of any of embodiments 1-5, wherein the silane comprises pentyltriethoxysilane.

Embodiment 12. The method of any of embodiments 1-5, wherein the silane comprises 3,3,3,-trifluoropropyl trimethoxysilane.

Embodiment 13. The method of any preceding embodiment, wherein the modified surface has an average root mean square (RMS) roughness of at least about 5 nm.

Embodiment 14. The method of embodiment 13, wherein the modified surface has an RMS rougness of at least about 7 nm.

Embodiment 15. A method of treating a major surface of a broadband anti-reflective coating disposed on a coated article, the method comprising:

chemically grafting the major surface of the anti-reflection coating by:

exposing the surface of the coating to a solution including hydrolyzed silane comprising at least an alkyl and/or fluoroalkyl functional group, and
condensing the hydrolyzed silane via hydroxyl groups disposed on the major surface of the anti-reflection coating so as to form a modified surface comprising silane,

wherein the alkyl and/or fluoroalkyl functional group is oriented such that at least a terminal end of the functional group is proximate an outermost surface of the modified coating following said chemical grafting, and
wherein a contact angle of the modified surface is at least about 85 degrees.

Embodiment 16. The method of embodiment 15, wherein the modified surface has a contact angle of at least about 100 degrees.

Embodiment 17. The method of any of embodiments 15-16, wherein said chemical grafting causes an initial contact angle of the major surface to increase by about 90-120 degrees.

Embodiment 18. The method of any of embodiments 15-17, wherein the silane comprises an alkyl group.

Embodiment 19. The method of embodiment 18, wherein a terminal end of the alkyl group comprises a methyl group.

Embodiment 20. The method of any of embodiments 15-16, wherein the silane comprises a fluoroalkyl group.

Embodiment 21. The method of embodiment 20, wherein a terminal end of the fluoroalkyl group comprises carbon trifluoride.

Embodiment 22. The method of any of embodiments 15-16, wherein the silane comprises pentyltriethoxysilane.

Embodiment 23. The method of any of embodiments 15-16, wherein the silane comprises 3,3,3,-trifluoropropyl trimethoxysilane.

Embodiment 24. The method of any of embodiments 15-23, wherein the modified surface has an average root mean square (RMS) roughness of at least about 7 nm.

Embodiment 25. A coated article comprising:

a glass substrate;
a hydrophobic anti-reflection coating disposed, directly or indirectly, on the glass substrate,
wherein an outermost surface of the anti-reflection coating includes a silane comprising an alkyl and/or fluoroalkyl functional group, and
wherein the surface of the coating has a contact angle of at least about 85 degrees.

Embodiment 26. The coated article of embodiment 25, wherein the contact angle is at least about 100 degrees.

Embodiment 27. The coated article of any of embodiments 25-26, wherein the surface of the coating has an average root mean square roughness of at least about 7 nm.

**Claims**

1. A method of making a coated article, the method comprising:

   modifying a major surface of an antireflection coating supported by a glass substrate by treating said coating with a solution including a silane comprising at least one alkyl and/or fluoroalkyl functional group, such that the modified surface has a contact angle of at least about 85 degrees following said treating, preferably wherein the modified surface has a contact angle of at least about 100 degrees.

2. The method of claim 1, further comprising treating the coating with the silane-based solution for at least about 1 hour, preferably for at least about 2 hours.

3. The method of any preceding claim, wherein said treating causes an initial contact angle of the major surface to increase by from about 90 to 120 degrees.

4. The method of any preceding claim, wherein the silane comprises an alkyl group, preferably wherein a terminal end of the alkyl group comprises a methyl group.

5. The method of claim 4, wherein the silane is oriented in such a manner that the alkyl group is oriented proximate to an outermost portion of the modified surface of the anti-reflection coating.

6. The method of any preceding claim, wherein the modified surface has an average root mean square (RMS) roughness of at least about 5 nm.

7. A method of treating a major surface of a broadband anti-reflective coating disposed on a coated article, the method comprising:

chemically grafting the major surface of the anti-reflection coating by:

exposing the surface of the coating to a solution including hydrolyzed silane comprising at least an alkyl and/or fluoroalkyl functional group, and
condensing the hydrolyzed silane via hydroxyl groups disposed on the major surface of the anti-reflection coating so as to form a modified surface comprising silane,

wherein the alkyl and/or fluoroalkyl functional group is oriented such that at least a terminal end of the functional group is proximate an outermost surface of the modified coating following said chemical grafting, and
wherein a contact angle of the modified surface is at least about 85 degrees.

8. The method of claim 7, wherein the modified surface has a contact angle of at least about 100 degrees.

9. The method of any of claims 7-8, wherein said chemical grafting causes an initial contact angle of the major surface to increase by about 90-120 degrees.

10. The method of any of claims 7-8, wherein the silane comprises an alkyl group, preferably, wherein a terminal end of the alkyl group comprises a methyl group.

11. The method of any of claims 1-5 or 7-8, wherein the silane comprises a fluoroalkyl group preferably wherein a terminal end of the fluoroalkyl group comprises carbon trifluoride.

12. The method of any of claims 1-5 or 7-8, wherein the silane comprises pentyltriethoxysilane.

13. The method of any of claims 1-5 or 7-8, wherein the silane comprises 3,3,3,-trifluoropropyl trimethoxysilane.

14. The method of any of claims 13, 7-13, wherein the modified surface has an average root mean square (RMS) roughness of at least about 7 nm.

15. A coated article comprising:

a glass substrate (1);
a hydrophobic anti-reflection coating (3) disposed, directly or indirectly, on the glass substrate (1),
wherein an outermost surface of the anti-reflection coating (3) includes a silane comprising an alkyl and/or fluoroalkyl functional group, and
wherein the surface (10, 12) of the coating has a contact angle of at least about 85 degrees, preferably wherein the contact angle is at least about 100 degrees, preferably wherein the surface of the coating has an average root mean square roughness of at least about 7 nm.

Fig.1

Fig. 2(a)

Fig. 2(b)

H₃CH₂CO—Si—OCH₂CH₃
        |
      OCH₂CH₃

pentyltriethoxysilane

hydrolysis →

HO—Si—OH
      |
     OH

surface grafting →

—Si—O—Si—
  |       |
  O       O
  |       |

glass

Fig. 3

3,3,3-trifluoropropyl trimethoxysilane

hydrolysis

surface grafting

glass

Fig. 4

EP 2 669 259 A1

Fig. 5

R = CH₃CH₂

$R = CH_3CH_2$

$R_1 = CH_3CH_2CH_2CH_2CH_2$
or $CF_3CH_2CH_2$

intermediate

hydrolysis

esterification

hydrolyzed silane

Fig. 6(a)

$R = CH_3CH_2$

$R_1 = CH_3CH_2CH_2CH_2CH_2$
or $CF_3CH_2CH_2$

$H_2O + H^+$

Fig. 6(b)

Fig. 7

Fig. 8(a) and 8(b)

Fig. 9

Fig. 10

Fig. 11

Fig. 12

Fig. 13

Fig. 14

Fig. 15

Fig. 16

Europäisches
Patentamt

European
Patent Office

Office européen
des brevets

# EUROPEAN SEARCH REPORT

**Application Number**

EP 13 16 9969

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/192380 A1 (ELSBERND CHERYL L S [US] ET AL) 19 December 2002 (2002-12-19) * claims 1,6,26,28 * | 1-5,7-14 | INV. C03C17/42 |
| X | US 2003/180544 A1 (MURPHY NESTOR P [US]) 25 September 2003 (2003-09-25) * claim 7 * * figure 1 * | 1-5,7-14 | |
| X | WO 00/10934 A1 (PPG IND OHIO INC [US]) 2 March 2000 (2000-03-02) * claim 23 * | 1-5,7-14 | |
| X | US 6 312 808 B1 (VEERASAMY VIJAYEN S [US] ET AL) 6 November 2001 (2001-11-06) * claims 1,2 * | 1-5,7-14 | |

**TECHNICAL FIELDS SEARCHED (IPC)**

C03C

The present search report has been drawn up for all claims

| Place of search | Date of completion of the search | Examiner |
|---|---|---|
| Munich | 14 August 2013 | Saldamli, Saltuk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 16 9969

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2013

| Patent document cited in search report | | Publication date | Patent family member(s) | | Publication date |
|---|---|---|---|---|---|
| US 2002192380 | A1 | 19-12-2002 | NONE | | |
| US 2003180544 | A1 | 25-09-2003 | AU | 2003205066 A1 | 13-10-2003 |
| | | | US | 2003180544 A1 | 25-09-2003 |
| | | | WO | 03082760 A1 | 09-10-2003 |
| WO 0010934 | A1 | 02-03-2000 | AU | 5484499 A | 14-03-2000 |
| | | | WO | 0010934 A1 | 02-03-2000 |
| US 6312808 | B1 | 06-11-2001 | AU | 7178801 A | 30-01-2002 |
| | | | US | 6312808 B1 | 06-11-2001 |
| | | | US | 2001044030 A1 | 22-11-2001 |
| | | | WO | 0206174 A1 | 24-01-2002 |

EPO FORM P0459

For more details about this annex : see Official Journal of the European Patent Office, No. 12/82

**REFERENCES CITED IN THE DESCRIPTION**

**Patent documents cited in the description**

- US 4510344 A
- US 4806436 A
- US 6506622 B
- US 5977477 A
- JP 7122764 A

- US 360898 A
- US 13361754 A
- US 36089812 A
- US 36175412 A